# EUROPÄISCHE PATENTSCHRIFT

(11) **EP 2 784 441 B1**
(45) Veröffentlichungstag und Bekanntmachung des Hinweises auf die Patenterteilung: **02.09.2015**
(21) Anmeldenummer: 13001504.3
(22) Anmeldetag: 24.03.2013
(51) Int. Cl.: G01C 17/02, G01C 21/20

(54) **Lawinenkundliches Meßbesteck**
Avalanche measuring instrument
Etui de mesure des avalanches

(43) Veröffentlichungstag der Anmeldung: 01.10.2014
(73) Patentinhaber: Roller, Jörg, 86949 Windach (DE)
(72) Erfinder: Roller, Götz, 81476 München (DE)

(56) Entgegenhaltungen:
- EP-B1- 2 006 635
- DE-U1- 29 609 838

## Beschreibung

Die Erfindung betrifft einen lawinenkundlichen Kompaß mit einer in einer bestimmten Geometrie kombinierten Anordnung von geomorphologischen Symbolen, differenziert nach sonnseitigen und schattseitigen Bereichen der alpinen Höhenstufen.

Der Stand der Technik, an den hier angeknüpft wird, stellt sich wie folgt dar: Das in der Lawinenkunde gebräuchliche Kompaßsystem des lawinenkundlichen Kartographiebestecks, wie es sich auch aus der Druckschrift EP2006635B1 ergibt, ist insbesondere auf die Bearbeitung von Landkarten ausgerichtet. Es enthält einen sogenannten lawinenkundlichen Kompaß, bei dem ausgehend von der Richtung 0°/360° bei der Richtungsbezeichnung Süd (S) im linksläufigen System die 270° Richtung der geographischen Richtungsbezeichnung Ost (E) und die 90° Richtung der Richtungsbezeichnung West (W) zugeordnet ist, wodurch die Verknüpfung von Blickrichtungen und den hierzu entgegengesetzten Expositionsrichtungen hergestellt wird. Die Richtungswinkelangabe von auf einer gedachten horizontalen Ebene aufgebrachten Linearen (beispielsweise Windrichtungsangabe), die nicht Richtungslineare einer geneigten Fläche ist, wird auf den Rand des Kompaßkreises projiziert (polare Projektion) und fällt damit mit einem Teilstrich des Kompaßkreises zusammen, der die zur Blickrichtung entgegengesetzte Expositionsrichtung darstellt. Hinsichtlich von Windrichtungsangaben bedeutet das beispielsweise, daß durch die oben genannte Transformation der in der praktischen Anwendung bedeutsame Bezug zwischen einer gefährlichen Hangexposition im Sinne des Lawinenlageberichts und der im Lawinenlagebericht ebenfalls berichteten Windrichtung ohne weitere Rechenoperationen direkt visualisiert werden kann.

Das lawinenkundliche Kartographiebesteck hilft hauptsächlich in der Planungsphase einer Skitour, nicht aber in der daran anschließenden Ausführungsphase, wenn der Anwender mit einer Vielzahl an konkreten und unterschiedlichen geomorphologischen Gegebenheiten wie beispielsweise Rinnen, Mulden und Hangkanten in sonnseitigen und schattseitigen Bereichen über alle alpinen Höhenstufen, also vom Tal bis auf den Gipfel, konfrontiert wird; diese geomorphologischen Merkmale können insbesondere schattseitig aufgrund von sogenannten Triebschneeansammlungen zu tödlichen Fallen für den Skifahrer werden.

Der im Patentanspruch genannten Erfindung liegt das Problem zugrunde, daß das in der Druckschrift EP2006635B1 beschriebene lawinenkundliche Kartographiebesteck nur ungenügende Möglichkeiten bietet, in übersichtlicher Weise über verschiedene alpine Höhenstufen die Vielzahl der konkreten geomorphologischen Geländestellen wie beispielsweise felsdurchsetztes Gelände, Rinnen, Mulden, oder Hangkanten gleichzeitig differenziert nach sonnseitigem oder schattseitigem Gelände vor Ort schnell und unkompliziert den im Lawinenlagebericht genannten Gefahrenstellen zuzuordnen, ohne zuvor den Text des Lawinenlagerberichts entweder auswendig zu lernen oder ihn unterwegs während der Skitour immer wieder durchlesen zu müssen. Beide theoretische Möglichkeiten sind praxisfremd; von beiden wird erfahrungsgemäß kaum Gebrauch gemacht, selbst wenn sich der ausgedruckte Text des Lawinenlageberichts durchaus in Rucksack oder Jackentasche der Skitouristen befindet. Auch deshalb werden in der Praxis die im Lawinenlagebericht genannten geomorphologischen Geländestellen oftmals übersehen oder bei der Gefährdungsbeurteilung einfach vergessen, was tödliche Folgen haben kann. Mängel gibt es ebenfalls hinsichtlich einer schnellen und unkomplizierten Abschätzung der lawinenkundlich relevanten Hangneigung eines Hanges, bevor dieser begangen werden soll, sowie bei der Bestimmung der Lage von Triebschneefeldern aufgrund der vorherrschenden Windrichtung vor Ort.
In dem in der Druckschrift EP2006635B1 genannten lawinenkundlichen Kartographiebesteck ist die Visualisierung der Vielzahl der geomorphologischen Gefahrenstellen getrennt nach sonnseitigen und schattseitigen Bereichen über alle verschiedenen alpinen Höhenstufen außerdem deswegen nur unbefriedigend möglich, da die Verwendung von zu vielen Sektorenscheiben gleichzeitig zu einer gewissen Unübersichtlichkeit führt. Hinzu kommt neuerdings, daß die moderne Entwicklung bei der standardisierten Abfassung der Lawinenlageberichte im europäischen Raum zunehmend insbesondere auch aufgrund des Unfallgeschehens vermehrt die Geomorphologie nach schattseitigen und sonnseitigen Bereichen differenziert. Außerdem wird als Neuerung mittlerweile zusätzlich mit sogenannten Gefahrenmustern gearbeitet; in Österreich arbeitet man derzeit mit zehn solcher Gefahrenmuster, die aus dem Unfallgeschehen abgeleitet wurden, in der Schweiz dagegen mit vier Hauptmustern, die intern weiter differenziert werden. Diese Muster müssen mit den geomorphologischen Gefahrenstellen kombiniert werden, wofür das in der Druckschrift EP2006635B1 beschriebene System aus Sektoren und Zeigern aufgrund seiner Aufnahmekapazität für Sektoren und Zeiger nicht ausgelegt ist, so daß es insbesondere bei der Kombination von Gefahrenmustern mit geomorphologischen Symbolen zu Unübersichtlichkeiten im System kommt.

Die im Patentanspruch angegebene Erfindung setzt an dieser Stelle durch die angeführten Funktionsmerkmale zu einer Verbesserung an.
Dabei werden bei dem im Patentanspruch 1 genannten Gegenstand geomorphologische Symbole getrennt nach sonnseitigem und schattseitigem Bereich geometrisch so angeordnet, daß sie übereinander parallel zur West - Ost verlaufenden Richtung der lawinenkundlichen Kompaßrose zu liegen kommen. Dadurch läßt sich das System beliebig vergrößern und ausdifferenzieren und gleichzeitig die Zahl der in der Druckschrift EP2006635B1 beschriebenen Sektorenscheiben drastisch reduzieren, wodurch die Übersichtlichkeit und die praktische Anwendung verbessert weil vereinfacht wird. Eine durch die West- Ost - Richtung der lawinenkundlichen Kompaßrose senkrecht verlaufende Ebene teilt die Kompaßrose in jeweils einen Sektor, der sich von West über Nord nach Ost erstreckt, und einen Sektor, der sich von West über Süd nach Ost erstreckt. Letzterer fällt zusammen mit demjenigen geomorphologischen alpinen Bereich, der im Regelfall den sonnseitigen Lagen zugeordnet werden kann. Der Sektor von West über Nord nach Ost dagegen umfaßt den sogenannten schattseitigen Bereich, in dem sich ein großer Teil der tödlichen Lawinenunfälle ereignet. Die Symbole für die spezifischen geomorphologischen Gefahrenstellen werden nun parallel zu der oben genannten, die Kompaßrose fiktiv teilenden Ebene übereinander angeordnet. Damit kann nach einer Markierung des entsprechenden schattseitigen oder sonnseitigen Symbols als Gefahrenstelle gemäß den textlichen Angaben im Lawinenlagebericht bei einer Anvisierung eines realen geomorphologischen Merkmals im Gelände, das dem Symbol entspricht, über die Visierrichtung des lawinenkundlichen Kompasses sofort abgeglichen werden, ob es sich bei dem geomorphologischen Merkmal um eine Gefahrenstelle im Sinne des Lawinenlageberichts handelt, weil die Magnetnadel im lawinenkundlichen Kompaßsystem die Expositionsrichtung anzeigt und das markierte Symbol das geomorphologische Merkmal. Durch die Verknüpfung von Symbolen und lawinenkundlicher Kompaßrose über die genannte geometrische Anordnung entfällt das wiederholte Lesen der Textformulierungen des Lawinenlageberichts, welche die Expositionen mit Gefahrenstellen im geographischen System benennen, im Verlauf einer Skitour. Außerdem wird die Zahl der im lawinenkundlichen Kartographiebesteck eingesetzten Sektorenscheiben wie in der Druckschrift EP2006635B1 beschrieben ganz erheblich reduziert.

Die im Patentanspruch angegebene Erfindung trägt durch die optionale Verbindung des beschriebenen Systems mit mindestens einem Neigungsmeßgerät in einer bestimmten geometrischen Anordnung nun zu einer weiteren Informationsverknüpfung bei. Hierzu wird ein mechanischer oder elektronischer lawinenkundlicher Kompaß mit einem ebenfalls mechanischen oder elektronischen Meßgerät zur Neigungsmessung kombiniert. Die im Lawinenlagebericht angegebenen Gefahrenstellen berücksichtigen nämlich auch die Hangneigung. Wenn beispielsweise der Lawinenlagebericht davon spricht, daß Gefahrenstellen in steilen Hanglagen der Richtungen NW bis NE zu finden sind, sind entsprechend der internationalen Gepflogenheiten damit Hanglagen gemeint, die eine steilere Hangneigung als 30° aufweisen. Dementsprechend ist es notwendig, die Hangneigung zu messen und in Bezug zu den anderen Informationen zu setzen, will man herausfinden, ob mit dem genannten geomorphologischen Merkmal eine gefährliche Hangstelle vorliegt. Die Art und Weise wie Hangneigungen gemessen werden, ist dem Fachmann bekannt. Die Art des Neigungsmeßgeräts ist dem Fachmann ebenfalls bekannt. Im Gelände werden Neigungsmessungen beispielsweise mit einem einfachen, an einem auf der Visierlinie im Zentrum der lawinenkundlichen Kompaßrose liegenden Punkt aufgehängten Senklot mit Winkelmesser oder mit einem elektronischen Neigungsmesser durchgeführt. Entscheidend ist dabei, daß der Neigungswinkel in der sogenannten Falllinie des Hanges gemessen wird. In der Praxis kann dabei mit vier Neigungswinkeln gearbeitet werden, nämlich mit 25°, 30°, 35° und 40°, also wenigen definierten kritischen Neigungswinkel, die auf die im Lawinenlagebericht beschriebene Gefahrenlage abgestimmt sind. Da für eine direkte konkrete Gefährdungsaussage eine Verknüpfung der gemessenen Neigung mit den im Kompaßsystem eingestellten Informationen erfolgen muß, ist es erforderlich, daß der Neigungsmesser geometrisch so zum Kompaß angeordnet wird, daß die Neigung parallel zur Visierlinie des Kompaß (diese verläuft im lawinenkundlichen Kompaß von N nach S) gemessen wird; die Visierlinie muß also beim Meßvorgang parallel zur Falllinie des zu messenden Hanges verlaufen, wie dies auch in der Druckschrift EP2006635B1 beschrieben ist. Wenn - um das obige Beispiel aufzugreifen - der Lawinenlagebericht davon spricht, daß Gefahrenstellen in steilen Hanglagen der Richtungen NW bis NE zu finden sind und das Neigungsmeßgerät für die parallel zur Visierrichtung verlaufende Falllinie des anvisierten geomorphologischen Merkmals einen Winkel von 40° ergibt und gleichzeitig die Kompaßnadel für die gleiche Visierrichtung in den Sektor zwischen NW bis NE zeigt, dann hat man am Ort der Betrachtung, der anvisiert wird, eine geomorphologische Gefahrenstelle im Sinne des Lawinenlageberichts identifiziert, ohne eine einzige zusätzliche Rechenoperation oder gedankliche geometrische Transformation durchgeführt haben zu müssen, weil diese erforderlichen Operationen im System bereits berücksichtigt sind. Ein Blick auf das als Gefahrenstelle markierte geomorphologische Symbol, die gegebenenfalls gemessene Hangneigung und die Stellung der Kompaßnadel genügt.

Ein einfaches mechanisches Ausführungsbeispiel des Meßbestecks, hier mit Neigungsmesser, optionaler Befestigungseinrichtung für einen Skistock und für einen Windrichtungszeiger, ist in der nachfolgenden Zeichnung dargestellt.

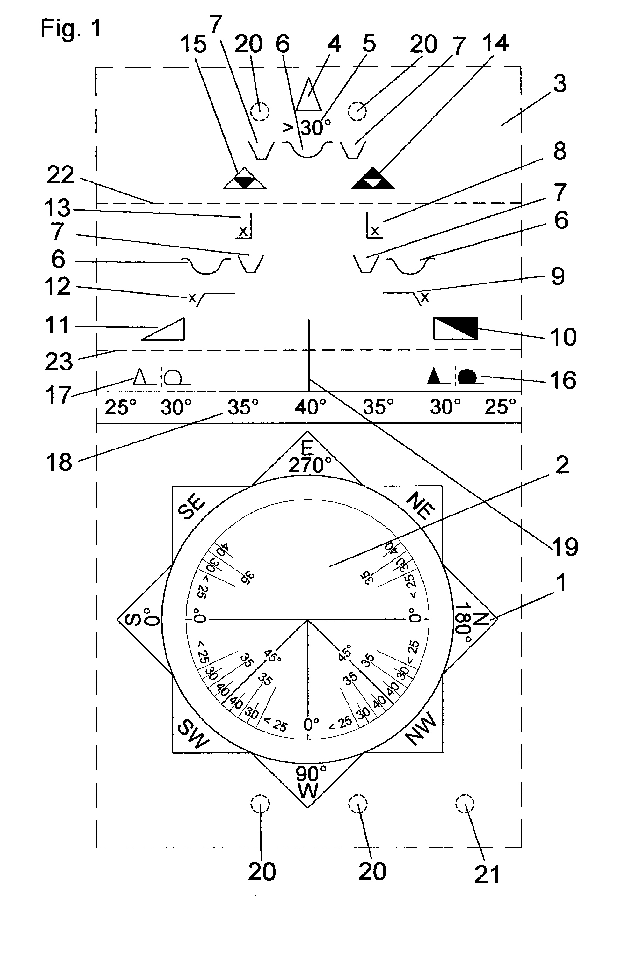

Es zeigt
- Fig. 1: Aufsicht auf das Meßbesteck mit lawinenkundlicher Kompaßrose (1) (Magnetnadel nicht dargestellt) mit Richtungsbezeichnungen und Richtungswinkelangaben, optionalem Neigungswinkelmesser mit Neigungswinkelangaben (2) und Senklot (nicht dargestellt) sowie Bodenplatte (3) mit bedruckten geomorphologischen Symbolen für Kammlagen (4), Steilhänge (5), schattseitige bzw. sonnseitige Mulden (6), schattseitige bzw. sonnseitige Rinnen (7), schattseitige Steilstufen (8), schattseitige Hangkanten (9), schattseitige großflächige Hänge (10), sonnseitige großflächige Hänge (11), sonnseitige Hangkanten (12) sonnseitige Steilstufen (13), schattseitiges felsdurchsetztes Gelände (14), sonnseitig felsdurchsetztes Gelände (15), schattseitiger lichter Wald (16), sonnseitiger lichter Wald (17), Waldgrenze (23), Grenze zwischen mittlerer Höhenlage und Gipfellage (22), Hangneigungsskala für sonnseitige und schattseitige Expositionen (18), stilisierter Trennstrich zwischen sonnseitiger und schattseitiger Exposition parallel der Ost-West-Richtung der lawinenkundlichen Kompaßrose (19); Perforationen als Teil der Befestigungsvorrichtung zur Montage am Skistock (20); Perforation als Befestigungsvorrichtung für einen Windrichtungszeiger (21).

Das als Ausführungsbeispiel aus Gründen der Übersichtlichkeit ohne Magnetnadel dargestellte, gewählte lawinenkundliche Meßbesteck umfaßt eine klare Bodenplatte (3) aus durchsichtigem Kunststoff mit einer aufgedruckten lawinenkundlichen Kompaßrose (1) mit Richtungsbezeichnungen und Richtungswinkelangaben, bei der Süd- und Nordrichtung gegenüber ihrer geographischen Lage vertauscht sind. Die Nordrichtung ist als Gitter-Süd eines geodätischen Koordinatengitters definiert. Ausgehend von der Richtungsbezeichnung Süd ist eine linksläufige Kompaßteilung mit (bezogen auf die normalerweise übliche Nord-Richtung) vertauschten Richtungsbezeichnungen erkennbar. Im Inneren der Kompaßrose befinden sich sechs Neigungswinkelmesser des Neigungsmeßgerätes (2) mit einem Senklot (nicht dargestellt), der größte jeweils angegebene Neigungswinkel beträgt 45°, die Winkel werden zwischen 25° und 45° in Teilstrichdifferenzen von 5° angegeben. Das Senklot ist im Zentrum der Kompaßrose unterhalb der Magnetnadel aufgehängt und während der Anwendung ebenfalls freischwingend. Magnetnadel und Senklot sind so befestigt, daß sie sich in ihrer Funktion nicht stören. Die Art der Magnetnadel und die Art des Senklots sowie ihre Befestigung sind dem Fachmann bekannt. Die Neigungswinkelmesser sind so angeordnet, daß Neigungsmessungen von Falllinien parallel der von N nach S verlaufenden Visierline bzw. der kurzen Seite der Bodenplatte (3), oder aber parallel der langen Seite der Bodenplatte (3), also parallel zur E - W Richtung bzw. zum stilisierter Trennstrich zwischen sonnseitiger und schattseitiger Exposition (19) durchgeführt werden können. Oberhalb der Kompaßrose (1) befindet sich auf der Bodenplatte (3) eine Hangneigungsskala für sonnseitige (linke Seite, gesehen vom stilisierter Trennstrich parallel der Ost-West-Richtung der lawinenkundlichen Kompaßrose (19)) und schattseitige (rechte Seite, gesehen vom stilisierter Trennstrich parallel der Ost-West-Richtung der lawinenkundlichen Kompaßrose (19)) Expositionen (18), außerdem weitere verschiedene geomorphologische Symbole (4 - 17; 22, 23). Diese sind hier beispielhaft so angeordnet, daß sie ihrem Auftreten nach von unten nach oben dem Auftreten in verschiedenen alpinen Höhenstufen entsprechen, vom Tal (schattseitiger lichter Wald (16), sonnseitiger lichter Wald (17)) über die Waldgrenze (23) bis zum Berggipfel (Kammlagen (4)). Die Hangneigungsskala für sonnseitige und schattseitige Expositionen (18) dient zur Markierung der Hangneigungen, die gemäß Lawinenlagebericht sonnseitig und/oder schattseitig als gefährlich einzustufen sind. Am oberen und unteren Ende der Bodenplatte (3) sind optional Perforationen als Teil der Befestigungsvorrichtung zur Montage am Skistock (20); angebracht. Die Bodenplatte (3) wird dabei beispielsweise oben und unten mit je einem Kabelbinder aus Kunststoff, der durch die beiden Perforationen geführt wird, so am Skistock unverrückbar fixiert, daß die lange Seite der Bodenplatte (3) parallel zum Skistock verläuft; der stilisierte Trennstrich zwischen sonnseitiger und schattseitiger Exposition parallel der Ost-West-Richtung der lawinenkundlichen Kompaßrose (19) verläuft damit ebenfalls parallel zum Skistock und liegt bei der hier dargestellten Anordnung der Perforationen (20) in der Stockmitte. Die Art des Kabelbinders ist dem Fachmann bekannt. Außerdem weist die Bodenplatte eine weitere Perforation als Befestigungsvorrichtung für einen Windrichtungszeiger (21) auf. Die Art des Windrichtungszeigers ist dem Fachmann bekannt. Der Windrichtungszeiger kann ein einfacher Wollfaden sein, der durch die Perforation (21) geführt und mit einem Knoten befestigt wird.

Die Funktionsweise des Bestecks ergibt sich aus folgenden Ausführungen:
Werden im Text des Lawinenlageberichts beispielsweise steile Hangkanten, also Hangkanten mit einem Hangneigungswinkel größer als 30°, in schattseitigen Lagen der Expositionsrichtungen NW über N bis NE als Gefahrenstellen benannt, so markiert der Anwender des lawinenkundlichen Meßbestecks beispielsweise bei der hier vorgestellten mechanischen Version mit einem wasserfesten Farbstift an der Kompaßrose (1) diese Expositionsrichtungen sowie das Symbol für Hangkanten in schattseitigen Bereichen (9), außerdem die Winkelangabe 30° auf der Hangneigungsskala für sonnseitige und schattseitige Expositionen (18), und zwar hier rechts vom stilisierter Trennstrich zwischen sonnseitiger und schattseitiger Exposition parallel der Ost-West-Richtung der lawinenkundlichen Kompaßrose (19). Im Gelände angekommen, visiert der Anwender parallel zur Falllinie die geomorphologische Gefahrenstelle Hangkante über die Richtung S an, wobei er die Bodenplatte (3) horizontal hält, damit die Magnetnadel frei schwingen kann. Der Meßvorgang von Expositionsmessungen ist dem Fachmann bekannt, er ist in der Druckschrift EP2006635B1 beschrieben. Zeigt den Anwender die Magnetnadel an, daß die markierte geomorphologische Gefahrenstelle in den Sektor NW über N bis NE fällt, rotiert er im Anschluß an die Richtungsmessung die Bodenplatte (3) um 90° um die N - S - Richtung als Rotationsachse, und zwar so, daß nach der Rotation die Richtungsbezeichnung W unterhalb und die Richtungsbezeichnung E oberhalb der Rotationsachse zu liegen kommt. Somit kann sofort im Anschluß an die Richtungsmessung eine Neigungsmessung mit Hilfe des optionalen Neigungsmeßgerätes (2) und der kurzen Kante der Bodenplatte (3) durchgeführt werden, weil die kurze Kante parallel zur Visierrichtung N - S verläuft. Die kurze Kante muß nur noch so verkippt werden, daß sie parallel zur Fallrichtungslinie des Hanges verläuft. Ergibt die Neigungsmessung einen Hangneigungswinkel, der geringer ist als 30°, so handelt es sich bei der anvisierten Hangkante nicht um eine geomorphologische Gefahrenstelle im Sinne des Lawinenlageberichts, obwohl sie in den Expositionssektor NW über N bis NE fällt. Beträgt der Hangneigungswinkel dagegen mehr als 30°, so handelt es sich bei der anvisierten Hangkante um eine geomorphologische Gefahrenstelle, weil nach Neigung und Exposition die im Lawinenlagebericht genannten Gegebenheiten erfüllt sind.
   Weiterhin kann an der optionalen Perforation als Befestigungsvorrichtung für einen Windrichtungszeiger (21) ein solcher Windrichtungszeiger in Form eines Wollfadens angebracht werden. Die aktuelle Windrichtung vor Ort im Gelände kann dann bestimmt werden, indem die Visierrichtung bei S der lawinenkundlichen Kompaßrose (1) so lange gegen die Windströmung verdreht wird, bis sich der nach Lee, also zur windabgewandten Seite auswehende Wollfaden parallel zur kurzen Kante der Bodenplatte (3) unterhalb der Kompaßrose ausrichtet. Die Windrichtung kann dann mit Hilfe der Magnetnadel aus der Richtungswinkelangabe der Kompaßrose (1) abgelesen werden. Die zugeordnete Richtungsbezeichnung bezeichnet die Exposition der Gefahrenstellen, bei denen vor Ort aktuell mit vom Wind verfrachtetem Triebschnee zu rechnen ist.

Mit dem lawinenkundlichen Meßbesteck kann also auch der Nichtfachmann im Verlauf einer Skitour an jedem beliebigen Punkt zu jeder beliebigen Zeit die übersichtliche Identifizierung der im Lawinenlagebericht genannten geomorphologischen Gefahrenstellen getrennt nach sonnseitigen und schattseitigen Bereichen vornehmen, insbesondere wenn das Meßbesteck an einen Skistock unterhalb des Griffs montiert wird und somit jederzeit verfügbar ist. Mit Hilfe der optionalen als Befestigungsvorrichtung für einen Windrichtungszeiger (21) kann der Anwender nach Anbringung eines Windrichtungsanzeigers aus der Messung der Windrichtung vor Ort auf die Lage von frischen Triebschneefeldern schließen. Die Erfindung ermöglicht einem breiten Anwenderkreis aus Fachleuten und Nichtfachleuten die im Textteil eines Lawinenlageberichts benannten geomorphologischen Gefahrenstellen in ein Symbol zu überführen, welches in einer bestimmten geometrischen Anordnung zur lawinenkundlichen Kompaßrose steht. Mögliche Gefährdungen durch Lawinen, insbesondere durch die Selbstauslösung derselben, können so übersichtlicher dargestellt werden, als dies bislang der Fall war. Ein weiterer großer Vorteil des lawinenkundlichen Meßbestecks besteht darin, daß der Anwender durch die Montage des Meßbestecks am Skistock die als Gefahrstellen markierten geomorphologischen Symbole immer vor Augen hat und sich die geomorphologischen Symbole um die sogenannten Gefahrenmuster der modernen Lawinenkunde ergänzen lassen und so eine flexible, bedarfsgerechte und auf individuelle Ansprüche zugeschnittene Ausgestaltung des Systems ermöglichen.

Das lawinenkundliche Kartographiebesteck hat dementsprechend einen sehr weitgefaßten Anwendungsbereich. Es ist wichtig für alle Personen, die beruflich oder im Rahmen der Freizeitgestaltung mit lawinenkundlichen Fragestellungen befaßt sind. Insgesamt ist die Anwendung des lawinenkundlichen Meßbestecks ein sehr kostengünstiger, leicht erlernbarer und damit nutzerfreundlicher Weg, die nach sonnseitigen und schattseitigen Bereichen differenzierten geomorphologischen Gefahrenstelleninformationen des Lawinenlageberichts zu visualisieren, mit den neuartigen österreichischen und schweizerischen Gefahrenmustern zu verbinden und gegebenenfalls auch durch Messung lokaler Windströme frische Triebschneefelder zu lokalisieren.

Es befriedigt damit das seit langer Zeit diesbezüglich vorhandene Bedürfnis insbesondere von Personen mit geringer technischer oder naturwissenschaftlicher Vorbildung, die derzeit insbesondere einer Verknüpfung der vielschichtigen lawinenkundlichen Informationen im Textteil des Lawinenlageberichts und insbesondere deren Übertragung auf konkrete Geländeformen, die darüber hinaus nach sonnseitigen und schattseitigen Bereichen differenziert werden müssen, weitgehend hilflos gegenüberstehen. Der verbreitete Einsatz eines derartigen technischen Hilfsmittels kann darüber hinaus Ansporn für Anbieter von Lawinenlageberichten sein, diese insbesondere durch geomorphologische Präzisierung und Verwendung von europaweit einheitlichen Symbolen für geomorphologische Gefahrenstellen nutzerfreundlicher zu gestalten und damit qualitativ weiter zu verbessern.

## Patentansprüche

1. Lawinenkundliches Meßbesteck, insbesondere zur lawinenkundlichen Gefährdungsbeurteilung geomorphologischer Geländemerkmale, **dadurch gekennzeichnet, daß** es auf einer Bodenplatte (3), die gleichzeitig der Kompaßboden sein kann, einen lawinenkundlichen Kompaß (1) mit in einer bestimmten Geometrie parallel zu der von West nach Ost der lawinenkundlichen Kompaßrose verlaufenden Richtung übereinander angeordneten geomorphologischen Symbolen (4 - 18; 22, 23), die geometrische Zeichen, Buchstaben, Zahlen oder Kombinationen derselben sein können, sowie gegebenenfalls mindestens ein Neigungsmeßgerät (2), das ein Senklot sein kann, Perforationen als Teil der Befestigungsvorrichtung zur Montage am Skistock und eine Perforation als Befestigungsvorrichtung für einen Windrichtungszeiger umfaßt.

## Claims

1. An avalanche measuring instrument, particularly for avalanche-related hazard analysis of geomorphological landscape features, **characterized in that** said instrument comprises an avalanche-related compass (1) on a bottom plate (3) that can simultaneously be the base of the compass, said compass having geomorphological symbols (4-18; 22, 23) that can be geometric symbols, letters, numerals, or combinations of the same, disposed one above the other in a particular geometry parallel to the direction running from west to east of the avalanche-related compass rose, and at least one tilt measuring device (2) that can be a plumb line, perforations as part of the mounting fixture for mounting on a ski pole, and a perforation as an attachment fixture for a wind direction indicator.

## Revendications

1. Kit d'instrumentation de mesure des avalanches, en particulier pour l'évaluation des risques d'avalanche des caractéristiques géomorphologiques de terrains, **caractérisé en ce qu'**il comporte sur une plaque de base (3), qui peut être simultanément la base du compas, un compas d'étude d'avalanches (1) avec des symboles géomorphologiques (4 - 18 ; 22, 23) disposés les uns au-dessus des autres dans une géométrie déterminée, parallèle à la direction de l'ouest à l'est de la rose du compas d'étude des avalanches, qui peuvent être des signes géométriques, des lettres, des chiffres ou des combinaisons de ces symboles, ainsi que, le cas échéant, au moins un inclinomètre (2), qui peut être un fil à plomb, des perforations en tant que partie du dispositif de fixation pour le montage au bâton de ski et une perforation en tant que dispositif de fixation pour un indicateur de direction du vent.
